Europäisches Patentamt

European Patent Office

Office européen des brevets

(11) Publication number: **0 069 306 B1**

# (12) EUROPEAN PATENT SPECIFICATION

(45) Date of publication of patent specification: **15.03.89**

(51) Int. Cl.⁴: **G 02 B 5/32**, G 06 K 7/10

(21) Application number: **82105641.3**

(22) Date of filing: **25.06.82**

(54) Hologram scanner.

(30) Priority: **26.06.81 JP 100160/81**
**29.12.81 JP 212414/81**

(43) Date of publication of application:
**12.01.83 Bulletin 83/02**

(45) Publication of the grant of the patent:
**15.03.89 Bulletin 89/11**

(84) Designated Contracting States:
**DE GB SE**

(56) References cited:
**US-A-4 165 464**
**US-A-4 333 006**

(73) Proprietor: **MITSUBISHI DENKI KABUSHIKI KAISHA**
**2-3, Marunouchi 2-chome Chiyoda-ku Tokyo 100 (JP)**

(72) Inventor: **Nishi, Kazuro c/o Mitsubishi Denki K.K.**
**Product Development Laboratory No. 80, Azanakano**
**Minami-shimizu Amagasaki-shi Hyogo (JP)**
Inventor: **Kurahashi, Koichiro c/o Mitsubishi Denki K.K.**
**Central Research Laboratory No. 80, Azanakano**
**Minami-shimizu Amasakaki-shi Hyogo (JP)**
Inventor: **Hashimoto, Tsutomu c/o Mitsubishi Denki K.K.**
**Communication Equipment Works No. 80, Azanakano**
**Minami-shimizu Amagasaki-shi Hyogo (JP)**
Inventor: **Senoo, Toshihiko c/o Mitsubishi Denki K.K.**
**Communication Equipment Works No. 80, Azanakano**
**Minami-shimizu Amagasaki-shi Hyogo (JP)**
Inventor: **Yamato, Shinji c/o Mitsubishi Denki K.K.**
**Communication Equipment Works No. 80, Azanakano**
**Minami-shimizu Amagasaki-shi Hyogo (JP)**

Courier Press, Leamington Spa, England.

**EP  0 069 306  B1**

74 Representative: **Lehn, Werner, Dipl.-Ing. et al**
**Hoffmann, Eitle & Partner Patentanwälte**
**Arabellastrasse 4**
**D-8000 München 81 (DE)**

## Description

This invention relates to a hologram scanner comprising:

a hologram disk including a plurality of hologram lenses arranged circumferentially thereon;

means for rotating said hologram disk;

light beam guide means for successively applying a light beam to said hologram lenses on said hologram disk; and

a reading window for receiving an object to be read by said light beam applied through said hologram lenses. It is applicable to use in reading bar codes in a POS or UPC system or the like.

Such a scanner is disclosed in US—A— 4 165 464.

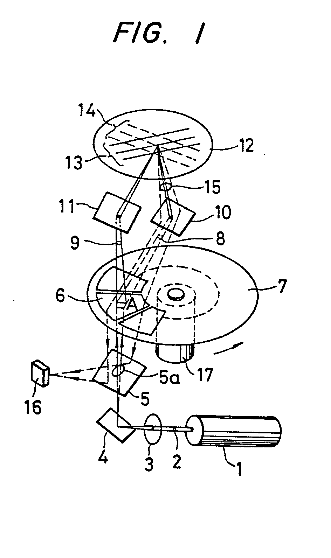

A conventional hologram scanner of this type is also shown in Fig. 1 of the accompanying drawings. Fig. 1 shows a laser oscillator 1; a light beam 2; a lense 3; a mirror 4; a mirror 5 having a hole 5a through which the light beam 2 passes; hologram lenses 6 for deflecting the light beam 2; a hologram disk 7 containing the hologram lenses 6, the centers of which are displaced in correspondance to the pitch of a scanning line, and the number of which is equal to the number of scanning lines; and first and second scanning beams 8 and 9 which are diffracted to spatially separated positions, respectively. Further, Fig. 1 shows mirrors 10 and 11 for reflecting the scanning beams 8 and 9, respectively; a reading window 12; scanning lines 13 and 14 provided by the scanning beams 8 and 9, respectively; a light beam 15 scattered by a bar code on a label which is placed on the reading window; a photo-detector 16; and a motor 17 for rotating the hologram disk 7.

In operation, the light beam 2 from the laser oscillator 1 is applied through the lense 3, the mirror 4 and the hole 5a of the mirror 5 to the hologram lenses 6. As the hologram disk 7 is turned by the motor 17, the light beam 2 is deflected by the hologram lenses on. the hologram disk 7, thus providing successive scanning beams. Typical of the scanning beams thus provided are the first and second scanning beams 8 and 9 mentioned above. The direction of deflection of these scanning beams is in parallel with a tangential line at the point A (which is the incident point of the light beam) of the hologram disk 7. As the centers of the hologram lenses 6 are displaced as described above, the scanning beams 8 and 9 are shifted radially of the hologram disk 7. Accordingly, parallel scanning lines, the number of which are equal to the number of hologram lenses 6 on the hologram disk 7, are generated. By increasing the amount of displacement of the centers of the hologram lenses 6, all of the scanning lines may be provided at spatially separated positions and divided into two groups. This is to facilitate the setting of the mirrors 10 and 11 to provide two scanning line directions on the reading window 12.

The scanning beam groups, which are represented by the first and second scanning beams 8 and 9, are reflected by the first and second mirrors 10 and 11 which are set at predetermined angles and at predetermined positions, to thus provide scanning lines 13 and 14, extending in two directions, over the reading window 12.

When a label is scanned according to the above-described scanning pattern, the light beam 15 scattered by the bar code on the label advances along the optical path of the light beam 2, thus being collected on the photo-detector 16. As a result, the scattered light beam 15 is converted into an electrical signal by the photo-detector 16. Thus, the bar code has been optically read.

Fig. 1 shows two scanning beams 8 and 9 extending from one hologram lens 6. However, it should be noted that, in practice, only one scanning line is obtained from one hologram lens. That is, for convenience in description, Fig. 1 shows another hologram lens which is also brought into the optical path of the light beam 2 by rotation of the hologram disk 7.

In order to make it possible to read a bar code in all directions with high accuracy with such a hologram scanner, it is necessary to produce a scanning pattern having a number of scanning lines in many directions. In the case of reading a bar code label of small size, or a label of small height, or in the case of reading a non-moving label, the conventional hologram scanner is not sufficient in the number of scanning line directions. Thus, it is necessary for the conventional hologram scanner to increase its number of scanning line directions. When it is so required to modify the conventional hologram scanner, it is necessary to provide reflecting mirrors, the number of which is at least equal to the number of required scanning directions. This requires the arrangements of the hologram scanner to be intricate, which limits the increase in the number of scanning directions. On the other hand, a set number of scanning lines provided by the hologram disk must be separately assigned according to the plurality of scanning directions required. This means that the number of scanning lines in each direction is decreased, and thus the number of scanning lines may be insufficient.

An object of this invention is at least substantially to eliminate the above-described difficulties accompanying a conventional hologram scanner.

More specifically, an object of the invention is to provide a hologram scanner in which a hologram disk and light beam guide means for successively switching light beam irradiation regions suitably cooperate thereby to make it possible to read a bar code in all directions with high accuracy.

According to the invention, the scanner defined in the first paragraph of this specification is characterised in that said light beam guide means is arranged to shift its irradiation region on the plane defined by said hologram lenses in a circular path around the axis of rotation of said hologram disk.

For a better understanding of the invention and to show how the same may be carried into effect, reference will now be made, by way of example, to the accompanying drawings, in which:

Fig. 1 is a perspective view of a conventional hologram scanner;

Fig. 2 is a sectional view of one example of a hologram scanner according to this invention;

Fig. 3 is an explanatory diagram for describing a scanning pattern on a reading window when only a hologram disk is turned (with a rotary disk maintained stopped);

Fig. 4 is an explanatory diagram for describing the scanning pattern on the reading window when both the hologram disk and the rotary disk are turned;

Fig. 5 is an explanatory diagram for describing operation in which a light beam is deflected when passing through hologram lenses on the hologram disk, thus becoming a scanning beam, which scans a predetermined region of the reading window; and,

Figs. 6 and 7 are explanatory diagrams showing scanning patterns obtained by shifting scanning lines on the reading window by P/4 (where P is the scanning beam pitch). In the case of Fig. 6, only the hologram disk is turned, and the rotary disk is set in two positions different by 180° in phase. In the case of Fig. 7, both the hologram disk and the rotary disk are turned.

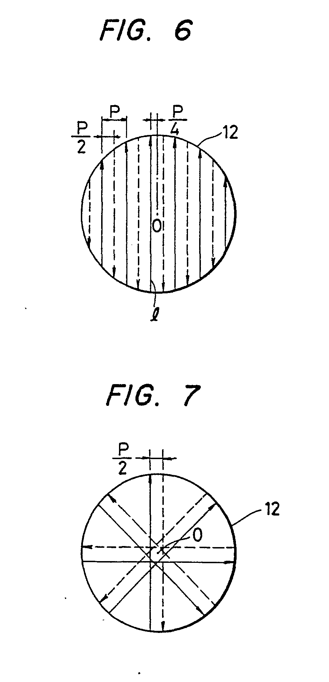

In Figs. 4 and 7, for convenience in illustration, among the scanning lines in various directions, only those coincident with or adjacent to the central ones are shown.

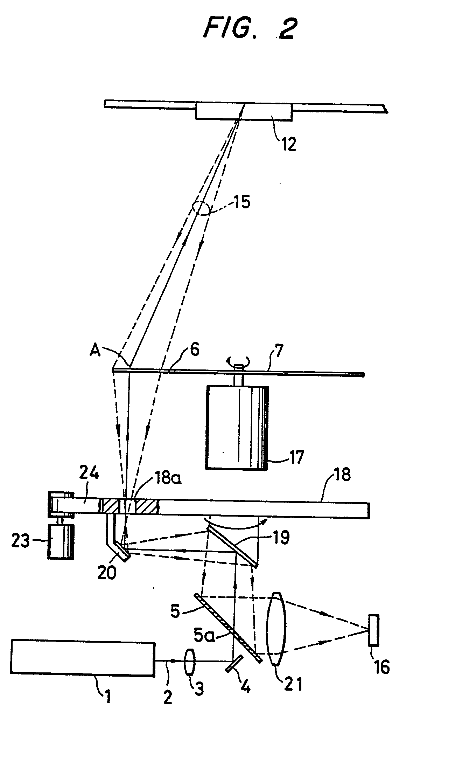

Fig. 2 is a sectional view showing the arrangement of one example of a hologram scanner according to this invention.

In Fig. 2, those components which have been previously described with reference to Fig. 1 are similarly numbered. Further in Fig. 2, reference numeral 18 designates a rotary disk having a hole 18a through which the light beam 2 can pass, and a rotary shaft coaxial with the rotary shaft of the motor 17; 19 is a first mirror which is fixedly set at the center of the rotary disk at a predetermined angle; and 20 is a second mirror which is fixedly secured to the peripheral portion of the rotary disk 18 so that it is turned together with the first mirror 19. A condenser pens 21, a motor 23 for rotating the rotary disk 18 and a belt 24 complete the arrangement. The rotary disk 18, the first mirror 19 and the second mirror 20 form light beam guide means for successively shifting the irradiation region in a path encircling the axis of rotation of said hologram disk 7 to apply successively the light beam 2 to the hologram lenses 6 . on the disk 7.

The light beam 2 from the laser oscillator 1 is applied through the lens 3 to the mirror 4. The light beam 2 thus applied is reflected by the mirror 4, and is then applied through the hole 5a of the mirror 5 to the first mirror 19. In this operation, the optical axis is coincident with the rotary axis of the rotary disk 18.

The light beam 2 reflected by the first mirror 19 is reflected by the second mirror 20, which is fixedly secured in such a manner as to turn together with the first mirror 19, as a result of which the light beam 2 thus reflected is applied to one of the hologram lenses 6 on the hologram disk 7.

The light beam is diffracted by the hologram lens 6, thus reaching the reading window 12.

The light beam 15 scattered by the bar code on a label on the reading window 12 advances along the optical path of the light beam 2 in the opposite direction to reach the mirror 5, where it is reflected. The light beam 15 thus reflected is applied through the condenser lens 21 to the photo-detector 16, where it is converted into an electrical signal.

Now, the case where the hologram disk 7 and the rotary disk 18 are turned will be described.

First, the hologram disk 7 is turned for instance at 5,000 r.p.m. by the motor 17. Similarly as in the above-described case, the light beam 2 provides parallel scanning lines (a raster pattern) the number of which is equal to the number of hologram lenses on the hologram disk 7, on the reading window 12.

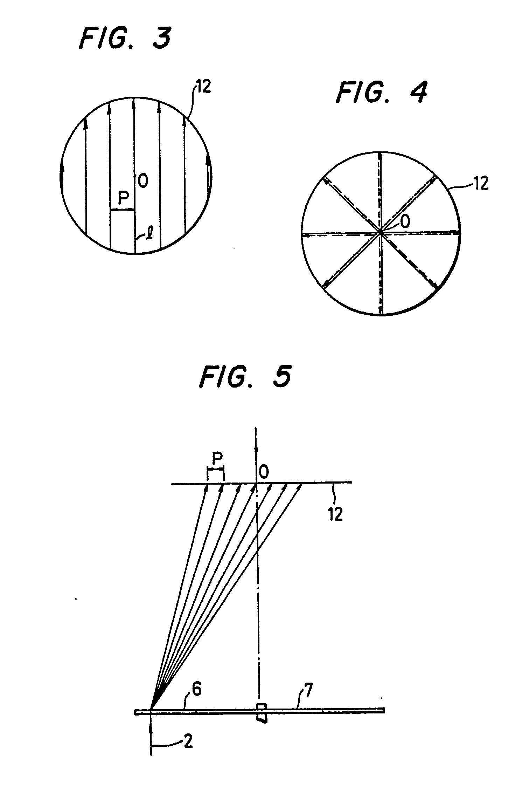

Fig. 5 illustrates the light beam 2 which is deflected by rotation of the hologram disk 7 to scan a predetermined region of the reading window 12. Fig. 3 shows the scanning pattern on the reading window. In Fig. 3 reference character P designates a scanning line pitch, and e, the center scanning line in the pattern.

Next, the hologram disk 7 is turned in one direction and simultaneously the rotary disk 18 is turned in the opposite direction through the belt 24 by the motor 23 at a speed much lower than the speed of the hologram disk 7 (for instance at 300 r.p.m.). As a result, the light beam 2 incident to the hologram disk 7 is turned through 360° by means of the first and second mirrors 19 and 20, and the light beam incidence point (or the point A) on the hologram disk 7 is moved along the circumference of the disk 7. As the direction of the above-described scanning line is parallel to the direction of a tangential line at the light beam incidence point on the hologram disk 7, the entire raster scanning pattern is turned through 360° by the rotation of the light beam, as shown in Fig. 4. Fig. 4 shows only the central scanning lines for convenience in illustration; however, it should be noted that, in practice, there are a number of scanning lines parallel with the central scanning lines. The number of scanning line directions included in the scanning pattern thus obtained can be substantially determined from the ratio of the speed of the hologram disk 7 to the speed of the rotary disk 18 (for instance 5000/300 approximately equal to 17).

Thus, laser beam scanning can be achieved in a number of directions without decreasing the number of scanning lines, that is, a bar code can be read in any orientation.

If, as shown in Fig. 6, the scanning lines on the reading window 12 are provided at positions displaced from the center by P/4 and in parallel (as indicated by the solid lines) when only the hologram disk 7 is turned, the scanning lines can be shifted to positions indicated by the broken lines when the rotary disk 18 is turned through 180°.

The rotation of the scanning lines with the rotation of the rotary disk 18 can be understood from Fig. 7 which shows only one scanning line, by way of example.

As is apparent from the above description, the number of scanning lines per unitary area on the reading window 12 can be doubled, and the capability of reading a bar code in all directions can be improved according to the invention.

In the above-described example, the light beam is applied perpendicularly to the hologram disk by means of first and second mirrors integral with the rotary disk. However, the hologram scanner may be modified so that the light beam reflected from the first mirror is applied directly to the hologram disk at a certain angle, or is introduced to the hologram disk through a medium such as an optical fiber.

In the above-described hologram scanner, the speed of the hologram disk is higher than the rotary disk; however, the hologram scanner may be modified so that the former is lower than the latter.

Furthermore, in the above-described hologram scanner, the hologram disk and the rotary disk are turned in opposite directions; however, they may be turned in the same direction if the speeds thereof are much different from each other.

As is clear from the above description, in the hologram scanner according to the invention, the light beam irradiation regions are successively shifted by the means for guiding light beams, so that the light beam is applied successively to the hologram lenses on the hologram disk, which is turned. Therefore, there can be readily achieved a scanning pattern having a number of scanning lines in many directions, which makes it possible to read a bar code in all directions with high accuracy, and to read a bar code of a small height.

## Claims

1. A hologram scanner, comprising:
a hologram disk (7) including a plurality of hologram lenses (6) arranged circumferentially thereon;
means (17) for rotating said hologram disk;
light beam guide means (18, 19, 20) for successively applying a light beam (2) to said hologram lenses (6) on said hologram disk (7); and
a reading window (12) for receiving an object to be read by said light beam (2) applied through said hologram lenses (6), characterised in that:
said light beam guide means (18, 19, 20) is arranged to shift its irradiation region on the plane defined by said hologram lenses in a circular path around the axis of rotation of said hologram disk (7).

2. A hologram scanner according to claim 1 wherein said guide means is arranged to shift said irradiation region at an angular velocity different from that of said hologram disk (7) when rotating,

3. A hologram scanner as claimed in claim 1 or 2 in which said light beam guide means comprises a rotary disk (18) and means (23, 24) for turning said disk (18), and mirror means (19, 20) associated with said disk.

4. A hologram scanner as claimed in claim 3, said mirror means comprising a first mirror (19) provided at the center of said rotary disk (18) in a manner so as to turn together with said rotary disk; and a second mirror (20) provided at a peripheral portion of said rotary disk (18), said light beam (2) being introduced via said first and second mirrors to predetermined ones of said hologram lenses (6) by rotation of said rotary disk (18).

5. A hologram scanner as claimed in claim 3 or 4 wherein light beam scanning lines applied to said reading window (12) are arranged in a circular array due to relative rotation of said hologram disk (7) and said rotary disk (18), and wherein scanning lines in opposite directions are provided, said scanning lines in opposite directions being shifted so as not to be overlapped with one another.

6. A hologram scanner as claimed in any one of claims 3 to 5 wherein said hologram disk (7) and said rotary disk (18) are arranged for rotation in opposite directions.

7. A hologram scanner as claimed in any one of claims 3 to 5 wherein said hologram disk (7) and said rotary disk (18) are arranged for rotation in the same direction.

8. A hologram scanner as claimed in any one of claims 3 to 7 wherein said first and second mirrors are fixed to said rotary disk (18) in predetermined angular orientations.

9. A hologram scanner as claimed in any one of claims 3 to 8 wherein said rotary disk and said hologram disk are arranged to rotate about the same rotary axis.

10. A hologram scanner as claimed in any one of the preceding claims wherein said light beam guide means comprises optical fiber means.

## Patentansprüche

1. Hologrammabtaster mit:
einer Hologrammscheibe (7), die eine Mehrzahl von Hologrammlinsen (6) aufweist, die in Umfangsrichtung auf dieser angeordnet sind;
einer Einrichtung (17) zum Drehen der Hologrammscheibe;
einer Lichtstrahlführungseinrichtung (18, 19, 20) zum aufeinanderfolgenden Aufbringen eines Lichtstrahles (2) auf die Hologrammlinsen (6) auf der Hologrammscheibe (7); und
einem Lesefenster (12) zum Aufnehmen eines Objektes, das mittels des Lichtstrahles (2) zu lesen ist, der durch die Hologrammlinsen (6) aufgebracht wird; dadurch gekennzeichnet,
daß die Lichtstrahlführungseinrichtung (18, 19, 20) so angeordnet ist, daß ihr Bestrahlungsbereich auf der durch die Hologrammlinsen bestimmten Ebene in eine ringförmige Bahn um die Drehachse der Hologrammscheibe (7) verlagert wird.

2. Hologrammabtaster nach Anspruch 1, bei dem die Führungseinrichtung so angeordnet ist, daß der Bestrahlungsbereich bei einer Winkelgeschwindigkeit verlagert wird, die unterschiedlich von derjenigen der Hologrammscheibe (7) ist, wenn diese dreht.

3. Hologrammabtaster nach Anspruch 1 oder 2, bei dem die Lichtstrahlführungseinrichtung eine Drehscheibe (18) und eine Einrichtung (23, 24) zum Drehen der Scheibe (18) und eine Spiegeleinrichtung (19, 20) aufweist, die der Scheibe zugeordnet ist.

4. Hologrammabtaster nach Anspruch 3, wobei die Spiegeleinrichtung einen ersten Spiegel (19), der im Mittelpunkt der Drehscheibe (18) derart angeordnet ist, daß er mit der Drehscheibe zusammen dreht, und einen zweiten Spiegel (20) aufweist, der in einem umfangsseitigen Bereich der Drehscheibe (18) angeordnet ist, wobei der Lichtstrahl (2) über die ersten und zweiten Spiegel durch Drehung der Drehscheibe (18) zu vorbestimmten Hologrammlinsen (6) eingeleitet wird.

5. Hologrammabtaster nach Anspruch 3 oder 4, bei dem Lichtstrahlenabtastlinsen, die am Lesefenster (12) vorgesehen sind, in einer ringförmigen Anordnung aufgrund der Relativdrehung der Hologrammscheibe (7) und der Drehscheibe (18) angeordnet sind, und bei Abtastlinsen in gegenüberliegenden Richtungen vorgesehen sind, wobei die Abtastlinsen in gegenüberliegenden Richtungen derart verlagert werden, daß sie sich nicht gegenseitig überlappen.

6. Hologrammabtaster nach einem der Ansprüche 3 bis 5, bei dem die Hologrammscheibe (7) und die Drehscheibe (18) für eine Drehung in entgegengesetzten Richtungen angeordnet sind.

7. Hologrammabtaster nach einem der Ansprüche 3 bis 5, bei dem die Hologrammscheibe (7) und die Drehscheihe (18) für eine Drehung in der gleichen Richtung angeordnet sind.

8. Hologrammabtaster nach einem der Ansprüche 3 bis 7, bei dem erste und zweite Spiegel auf der Drehscheibe (18) in vorbestimmten Winkelausrichtungen befestigt sind.

9. Hologrammabtaster nach einem der Ansprüche 3 bis 8, bei dem die Drehscheibe und die Hologrammscheibe für eine Drehung um die gleiche Drehachse angeordnet sind.

10. Hologrammabtaster nach einem der vorhergehenden Ansprüche, bei dem die Lichtstrahlführungseinrichtung optische Fasereinrichtungen aufweist.

**Revendications**

1. Dispositif holographique de balayage, comprenant:

un disque holographique (7) comprenant une pluralité de lentilles holographiques (6) disposées circonférenciellement sur ce disque;

un moyen (17) pour faire tourner ledit disque holographique;

un moyen (18, 19, 20) de guidage de faisceau lumineux pour appliquer successivement un faisceau lumineux (2) auxdites lentilles holographiques (6) du disque holographique (7); et

une fenêtre d'exploration (12) pour recevoir un objet devant être exploré par le faisceau lumineu (2) appliqué à travers lesdites lentilles holographiques (6), caractérisé en ce que:

le moyen (18, 19, 20) de guidage de faisceau lumineux est agencé de manière à déplacer sa région d'irradiation dans le plan défini par lesdites lentilles holographiques suivant un trajet circulaire autour de l'axe de rotation dudit disque holographique (7).

2. Dispositif holographique de balayage selon la revendication 1, dans lequel ledit moyen de guidage est agencé de manière à déplacer ladite région d'irradiation à une vitesse angulaire différente de celle du disque holographique (7) quand il tourne.

3. Dispositif holographique de balayage selon la revendication 1 ou 2, dans lequel ledit moyen de guidage de faisceau lumineux comprend un disque rotatif (18) et un moyen (23, 24) pour faire tourner le disque (18) et un moyen formant miroir (19, 20) associé audit disque.

4. Dispositif holographique de balayage selon la revendication 3, ledit moyen formant miroir comprenant un premier miroir (19) disposé au centre du disque rotatif (18) de manière à tourner conjointement avec le disque rotatif; et un second miroir (20) disposé dans une partie périphérique du disque rotatif (18), ledit faisceau lumineux (2) étant introduit par l'intermédiaire des premier et second miroirs vers des lentilles prédéterminées parmi lesdites lentilles holographiques (6) par la rotation du disque rotatif (18).

5. Dispositif holographique de balayage selon la revendication 3 ou 4, dans lequel les lignes de balayge de faisceau lumineux appliquées à ladite fenêtre d'exploration (12) sont disposées suivant un arrangement circulaire par suite de la rotation relative du disque holographique (7) et du disque rotatif (18) et dans lequel sont prévues des lignes de balayage dans des sens opposés, lesdites lignes de balayage dans des sens opposés étant décalées de manière à ne pas se chevaucher les unes des autres.

6. Dispositif holographiques de balayage selon l'une quelconque des revendications 3 à 5, dans lequel le disque holographique (7) et le disque rotatif (18) sont agencés en vue d'une rotation dans des sens opposés.

7. Dispositif holographique de balayage selon l'une quelconque des revendications 3 à 5, dans lequel le disque holographique (7) et le disque rotatif (18) sont agencés en vue d'une rotation dans le même sens.

8. Dispositif holographique de balayge selon l'une quelconque des revendications 3 à 7, dans lequel les premier et second miroirs sont fixées au disque rotatif (18) suivant des orientations angulaires prédéterminées.

9. Dispositif holographique de balayage selon l'une quelconque des revendications 3 à 8, dans lequel le disque rotatif et le disque holographique sont agencés de manière à tourner autour de même axe de rotation.

10. Dispositif holographique de balayage selon l'une quelconque des revendications précédentes, dans lequel le moyen de guidage de faisceau lumineux comprend un moyen à fibres optiques.

# FIG. 1

## FIG. 2

*FIG. 3*

*FIG. 4*

*FIG. 5*

## FIG. 6

## FIG. 7